# EUROPÄISCHE PATENTANMELDUNG

(11) **EP 4 575 350 A1**
(43) Veröffentlichungstag der Anmeldung: **25.06.2025**
(21) Anmeldenummer: 23218516.5
(22) Anmeldetag: 20.12.2023
(51) Int. Cl.: F25B 1/10, F25B 5/02, F25B 7/00, F25B 9/00, F25B 49/02

(54) **PRÜFKAMMER UND VERFAHREN ZUR STEUERUNG**

(71) Anmelder: Weiss Technik GmbH, 35447 Reiskirchen (DE)
(72) Erfinder: ZAHRT, Yannik, 35466 Rabenau (DE); BLAUFELDER, David, 35394 Gießen (DE); HAACK, Christian, 35037 Marburg (DE)
(74) Vertreter: advotec.

(57) **Zusammenfassung**

Die Erfindung betrifft ein Verfahren zur Konditionierung von Luft in einem gegenüber einer Umgebung verschließbaren und temperaturisolierten Prüfraum einer Prüfkammer, sowie eine Prüfkammer, insbesondere Klimakammer, zur Aufnahme von Prüfgut, wobei mittels einer Kühleinrichtung (10) einer Temperiervorrichtung der Prüfkammer, mit einem Kühlkreislauf (11) mit Kohlenstoffdioxid (CO₂) als einem Kältemittel, einem Wärmeübertrager (12) im Prüfraum, einem Niederdruckverdichter (13) und einem in einer Strömungsrichtung des Kältemittels dem Niederdruckverdichter nachfolgenden Hochdruckverdichter (14), einem Gaskühler (15) und einem Expansionsventil (17) eine Temperatur in einem Temperaturbereich von -20 °C bis +180 °C innerhalb des Prüfraums ausgebildet wird, wobei die Temperatur in dem Prüfraum mittels einer Steuervorrichtung der Prüfkammer gesteuert und/oder geregelt wird, wobei mittels eines weiteren Kühlkreislaufs (34) der Kühleinrichtung mit einem weiteren Kältemittel, dem Wärmeübertrager im Prüfraum, einem weiteren Verdichter (35), einem weiteren Wärmeübertrager (36) und einem weiteren Expansionsventil (37) die Temperatur innerhalb des Prüfraums ausgebildet wird.

## Beschreibung

Die Erfindung betrifft eine Prüfkammer, insbesondere Klimakammer zur Konditionierung von Luft, sowie ein Verfahren zur Konditionierung von Luft in einem gegenüber einer Umgebung verschließbaren und temperaturgedämmten Prüfraum einer Prüfkammer zur Aufnahme von Prüfgut, wobei mittels einer Kühleinrichtung einer Temperiervorrichtung der Prüfkammer, mit einem Kühlkreislauf mit Kohlenstoffdioxid als einem Kältemittel, einem Wärmeübertrager im Prüfraum, einem Niederdruckverdichter und einem in einer Strömungsrichtung des Kältemittels dem Niederdruckverdichter nachfolgenden Hochdruckverdichter, einem Gaskühler und einem Expansionsventil eine Temperatur in einem Temperaturbereich von -20°C bis + 180°C innerhalb des Prüfraums ausgebildet wird, wobei die Temperatur in den Prüfraum mittels einer Steuervorrichtung der Prüfkammer gesteuert und/oder geregelt wird.

Derartige Prüfkammern werden regelmäßig zur Überprüfung von physikalischen und/oder chemischen Eigenschaften von Gegenständen, insbesondere Vorrichtungen eingesetzt. So sind Temperaturprüfschränke oder Klimaprüfschränke bekannt, innerhalb derer Temperaturen in einem Bereich von -70°C bis +180°C eingestellt werden können. Bei Klimaprüfschränken können ergänzend gewünschte Klimabedingungen eingestellt werden, denen dann die Vorrichtung bzw. das Prüfgut über einen definierten Zeitraum ausgesetzt wird. Eine Temperierung eines das zu prüfende Prüfgut aufnehmendem Prüfraums erfolgt regelmäßig in einem Umluftkanal innerhalb des Prüfraums. Der Umluftkanal bildet einen Luftbehandlungsraum im Prüfraum aus, in dem Wärmetauscher zur Erwärmung oder Kühlung der den Umluftkanal bzw. den Prüfraum durchströmenden Luft angeordnet sind. Dabei saugt ein Lüfter bzw. ein Ventilator die im Prüfraum befindliche Luft an und leitet sie im Umluftkanal zu den jeweiligen Wärmetauschern. Das Prüfgut kann so temperiert oder auch einem definierten Temperaturwechsel ausgesetzt werden. Während eines Prüfinterwalls kann dann beispielsweise eine Temperatur zwischen einem Temperaturmaximum und einem Temperaturminimum der Prüfkammer wechseln. Eine derartige Prüfkammer ist beispielweise aus der EP 0 344 397 A2 bekannt.

Das in einem Kühlkreislauf eingesetzte Kältemittel sollte ein relativ geringes CO₂-Äquivalent aufweisen, das heißt ein relatives Treibhauspotenzial oder auch Global Warming Potential (GWP) sollte möglichst gering sein, um eine indirekte Schädigung der Umwelt durch das Kältemittel bei Freisetzung zu vermeiden. Es ist daher auch bekannt Kohlenstoffdioxid (CO₂) bzw. Kohlendioxid als Reinstoffkältemittel zu verwenden. Kohlenstoffdioxid ist kostengünstig erhältlich, nicht brennbar und durch einen GWP von 1 im Wesentlichen umweltneutral. Kohlenstoffdioxid weist eine Gefriertemperatur bzw. einen Tripelpunkt von -56,6°C auf, was eine Erzielung von niedrigeren Temperaturen mit Kohlenstoffdioxid alleine nicht ermöglicht.

Weiter sind Kühleinrichtungen bekannt, die als sogenannte Boosteranlage ausgeführt sind. In einem Kühlkreislauf der Kühleinrichtungen ist stets ein Hochdruckverdichter einem Niederdruckverdichter in Reihe nachgeschaltet, so dass eine stufenweise Verdichtung des Kältemittels mit dem Niederdruckverdichter und nachfolgend mit dem Hochdruckverdichter erfolgt. Aufgrund der hohen Anforderungen an eine Temperaturregelung innerhalb des Temperaturbereichs des Prüfraums kommt es während eines Betriebs der Prüfkammer regelmäßig zu Schwankungen in einer Lastanforderung. Eine von den Verdichtern und dem Expansionsventil erzeugte Kälteleistung muss daher stufenlos regelbar sein. Gleichwohl ist es wünschenswert, dass die Verdichter, wenn es sich beispielsweise um Kompressoren handelt, nicht häufig eingeschaltet und ausgeschaltet werden, um eine Lebensdauer der Verdichter zu verlängern.

Da Kohlenstoffdioxid als Kältemittel eine sehr hohe volumetrische Kälteleistung aufweist, wird selbst bei einem Einsatz von Verdichtern mit sehr wenig Hubvolumenstrom eine sehr große Kälteleistung durch den Kühlkreislauf bereitgestellt. Darüber hinaus ist ein Druckbereich von Kühlkreisläufen mit Kohlenstoffdioxid als Kältemittel bei einem transkritischen Betrieb sehr hoch (bis 120 bar), weshalb die zur Ausbildung des Kühlkreislaufs erforderlichen Komponenten vergleichsweise teuer sind. Hinzu kommt, dass derartige Kühlkreisläufe einen komplexen Aufbau aufweisen, was einen großen Bauraum erfordert. Bisher sind derartige Kühlkreisläufe mit Kohlenstoffdioxid als Kältemittel daher nur für Anlagen bzw. Prüfkammern mit entsprechend hoher Kälteleitung und damit einem vergleichsweise großen Prüfraum bzw. großen Geräteabmessungen sinnvoll nutzbar. Eine wirtschaftliche Nutzung in vergleichsweise kleinen Anlagen bzw. Prüfkammern mit einem kleinen Volumen eines Prüfraums, beispielsweise mit 25 Litern, ist bisher nicht möglich.

Weiter besteht das Problem, dass für eine Verwendung von Kohlenstoffdioxid als Kältemittel beziehungsweise einen großen Anteil an Kohlenstoffdioxid in dem Kältemittel sehr niedrige Temperaturen, beispielsweise < -50 °C, kaum ausgebildet werden können. Dies würde eine Verwendung von einem Kältemittel erfordern, welches weniger umweltfreundlich und/oder brennbar (A3) oder leicht brennbar (A2L) ist. Ein Kältemittel ist insbesondere dann brennbar, wenn es in die Brandklasse C nach der europäischen Norm EN2 beziehungsweise der DIN 378 Klassen A2, A2L und A3 in der zuletzt am Prioritätstag gültigen Fassung fällt.

Der vorliegenden Erfindung liegt daher die Aufgabe zugrunde, ein Verfahren zur Konditionierung von Luft in einem Prüfraum einer Prüfkammer sowie einer Prüfkammer vorzuschlagen, dass beziehungsweise die einen umweltfreundlichen Betrieb der Prüfkammer auch bei niedrigen Temperaturen ermöglicht.

Diese Aufgabe wird durch ein Verfahren mit den Merkmalen des Anspruchs 1 und eine Prüfkammer mit den Merkmalen des Anspruchs 18 gelöst.

Bei dem erfindungsgemäßen Verfahren zur Konditionierung von Luft in einem gegenüber einer Umgebung verschließbaren und temperaturgedämmten Prüfraum einer Prüfkammer, insbesondere Klimakammer zur Aufnahme von Prüfgut, wird mittels einer Kühleinreichung einer Temperiervorrichtung der Prüfkammer, mit einem Kühlkreislauf mit Kohlenstoffdioxid als einem Kältemittel, einem Wärmeübertrager im Prüfraum, einem Niederdruckverdichter und einem in einer Strömungsrichtung des Kältemittels dem Niederdruckverdichter nachfolgenden Hochdruckverdichter, einem Gaskühler und einem Expansionsventil eine Temperatur in einem Temperaturbereich von - 20°C bis + 180°C innerhalb des Prüfraums ausgebildet, wobei die Temperatur in dem Prüfraum mittels einer Steuervorrichtung der Prüfkammer gesteuert und/oder geregelt wird, wobei mittels eines weiteren Kühlkreislaufs der Kühleinrichtung mit einem weiteren Kältemittel, dem Wärmeübertrager im Prüfraum, einem weiteren Verdichter, einem weiteren Wärmeübertrager und einem weiteren Expansionsventil die Temperatur innerhalb des Prüfraums ausgebildet wird.

Bei dem erfindungsgemäßen Verfahren wird durch eine Temperaturisolierung von Seitenwänden, Bodenwänden und Deckenwänden ein Wärmeaustausch mit einer Umgebung des Prüfraums weitgehend vermieden.

Der Wärmeübertrager ist an den Kühlkreislauf angeschlossen bzw. in diesen so integriert, dass im Kühlkreislauf zirkulierendes Kältemittel durch den Wärmeübertrager strömt. Der Wärmeübertrager des Kühlkreislaufs ist innerhalb des Prüfraums bzw. in einem Luftbehandlungsraum des Prüfraums angeordnet, sodass Luft in den Prüfraum über den Wärmeübertrager konditioniert bzw. temperiert wird. Der Gaskühler ist ebenso in den Kühlkreislauf integriert und als ein Wärmeübertrager ausgebildet. Der Gaskühler ist in den Kühlkreislauf in Strömungsrichtung nachfolgend dem Hochdruckverdichter angeordnet, wobei das verdichtete Kältemittel, welcher nach der Verdichtung unter einem hohen Druck steht und im Wesentlichen gasförmig oder dampfförmig bzw. als Nassdampf vorliegt, in dem Gaskühler bzw. Kondensator kondensieren kann und dann im Wesentlichen in einem flüssigen Aggregatzustand vorliegt. Auch ist es möglich, dass das gasförmige Kältemittel in dem Gaskühler nicht kondensiert und den Gaskühler im Wesentlichen in gasförmigen Zustand wieder verlässt. Das Kältemittel wird dann nur erhitzt und liegt über dem kritischen Punkt (überkritisches Fluid). Der Gaskühler bzw. der betreffende Wärmeübertrager kann mit Mitteln zur Kühlung des Kältemittels, beispielsweise durch Luft oder Wasser, ausgestattet sein. Insbesondere kann der Gaskühler als luftgekühlter Lamellenrohrwärmeübertrager ausgebildet sein. Der Gaskühler ist dann besonders kompakt ausbildbar. Das Kältemittel strömt von dem Gaskühler über das Expansionsventil, über das es durch Expansion in Folge eines Druckabfalls wiederrum gasförmig, dampfförmig oder nassdampfförmig wird. Dabei durchströmt es den Wärmeübertrager, der dadurch gekühlt wird. Hier nimmt das Kältemittel über den Wärmeübertrager Wärme aus dem Prüfraum auf. Nachfolgend wird das gasförmige Kältemittel wieder vom dem Niederdruckverdichter und dem Hochdruckverdichter angesaugt und verdichtet.

Unter einem Expansionsventil wird zumindest ein Expansionsorgan, Drosselorgan, Drosselventil oder eine andere geeignete Verengung einer Fluidleitung verstanden. Das Expansionsventil sowie weitere Ventile des Kühlkreislaufs sind vorzugsweise regelbar ausgebildet.

Bei der vorliegenden Erfindung ist vorgesehen, dass an den Wärmeübertrager im Prüfraum der weitere Kühlkreislauf der Kühleinrichtung gekoppelt ist. Dabei ist das weitere Kältemittel in dem weiteren Kühlkreislauf stets von dem Kältemittel des Kühlkreislaufs getrennt. Der Wärmeübetrager verbindet die jeweiligen Kühlkreisläufe nicht miteinander. Daher ist es prinzipiell auch möglich, dass der Wärmeübertrager einen ersten Teil-Wärmeübertrager für den Kühlkreislauf, und einen zweiten Teil-Wärmeübertrager für den weiteren Kühlkreislauf ausbildet. Diese Teil-Wärmeübertrager können auch örtlich voneinander getrennt in dem Prüfraum angeordnet sein und bilden dann den Wärmeübertrager aus. Der weitere Kühlkreislauf weist den weiteren Wärmeübertrager auf, der als ein Gaskühler für das weitere Kältemittel ausgebildet ist. Das weitere Kältemittel kann dann über den weiteren Verdichter verdichtet, in dem weiteren Wärmeübertrager gekühlt beziehungsweise verflüssigt und über das weitere Expansionsventil zur Kühlung des Wärmeübertragers genutzt werden. Dabei ist vorgesehen, dass sich das weitere Kältemittel des weiteren Kühlkreislaufs von dem Kältemittel des Kühlkreislaufs unterscheidet. Das weitere Kältemittel kann dann so ausgewählt sein, dass mit dem weiteren Kältemittel eine Temperatur ausgebildet werden kann, die niedriger ist, als die niedrigste Temperatur, die mit dem Kältemittel ausgebildet werden könnte. Insgesamt wird es so möglich auch vergleichsweise tiefe Temperaturen mit der Prüfkammer ausbilden zu können, ohne dass es einer besonderen Änderung des Kühlkreislaufs bedarf. Hier kann weiterhin Kohlenstoffdioxid als Kältemittel verwendet werden, welches besonders umweltfreundlich ist. Der weitere Kühlkreislauf kann besonders einfach und kompakt ausgebildet sein und als weiteres Kältemittel ein vergleichsweise weniger umweltfreundliches Kältemittel aufweisen. Der Kühlkreislauf kann dann zu einem überwiegenden Teil einer Betriebsdauer der Kühleinrichtung betrieben werden, wobei der weitere Kühlkreislauf nur dann betrieben werden muss, wenn vergleichsweise tiefe Temperaturen erzielt werden sollen, was regelmäßig nicht häufig der Fall ist. Eine Menge an weniger umweltfreundlichem Kältemittel der Kühleinrichtung kann so wesentlich reduziert werden. Da der weitere Kühlkreislauf nur bei Bedarf betrieben wird, kann Energie eingespart werden. Eventuell erforderliche sicherheitstechnische Einrichtungen sind nur für einen kleineren Teil der Anlage erforderlich, was Kosten reduziert.

In dem Kühlkreislauf kann ein weiterer Bypass mit zumindest einem weiteren Ventil und dem weiteren Wärmeübertrager ausgebildet sein, wobei der weitere Bypass in Strömungsrichtung nach dem Gaskühler und vor dem Expansionsventil an eine Hochdruckseite sowie nach dem Wärmeübetrager und vor dem Niederdruckverdichter an eine Niederdruckseite angeschlossen sein kann, wobei über das weitere Ventil Kältemittel in die Niederdruckseite dosiert werden kann, und wobei das weitere Kältemittel des weiteren Kühlkreislaufs in dem weiteren Wärmeübertrager gekühlt werden kann. Der Kühlkreislauf kann demnach dazu genutzt werden, über den weiteren Bypass den weiteren Wärmeübertrager beziehungsweise Gaskühler des weiteren Kühlkreislaufs zu kühlen. Das weitere Ventil kann als ein Expansionsventil oder als ein einfaches Drosselventil ausgebildet sein. Ein Teil einer Kälteleistung des Kühlkreislaufs kann so genutzt werden um das weitere Kältemittel zu kondensieren beziehungsweise zu verflüssigen, um damit den weiteren Kühlkreislauf zu betreiben. Der Kühlkreislauf kann dadurch besonders effizient genutzt werden. Prinzipiell ist es jedoch auch möglich, dass der weitere Wärmeübertrager auch auf eine andere Weise gekühlt wird, beispielsweise mittels Luft oder Wasser.

An den weiteren Kühlkreislauf kann eine Speichereinrichtung für das weitere Kältemittel angeschlossen sein, wobei bei einer Temperatur in einem Temperaturbereich von +50 °C bis +180 °C innerhalb des Prüfraums das weitere Kältemittel in die Speichereinrichtung verlagert werden kann. Dadurch wird es dann auch möglich, ein vergleichsweise weniger umweltfreundliches Kältemittel als weiteres Kältemittel zu verwenden. Wenn das Kältemittel dann brennbar oder leicht brennbar ist, kann das weitere Kältemittel vollständig oder zu einem überwiegenden Teil in die Speichereinrichtung verlagert werden, so dass sich kein oder nur wenig weiteres Kältemittel in dem Wärmeübertrager befindet. Insbesondere bei höheren Temperaturen in dem Prüfraum besteht die Gefahr, dass es bei einer eventuellen Leckage des Wärmeübertragers beziehungsweise des weiteren Kühlkreislaufs innerhalb des Prüfraums zu einem Austritt von weiteren Kältemittel in den Prüfraum kommt, wobei dann ein explosionsfähiges Gemisch in dem Prüfraum entstehen kann. Wenn der weitere Kühlkreislauf nicht betrieben wird, kann das weitere Kältemittel in die Speichereinrichtung verlagert werden, so dass auf weitergehende sicherheitstechnische Einrichtungen, wie beispielsweise Sensoren oder dergleichen, verzichtet werden kann. Das Verlagern des weiteren Kältemittels in die Speichereinrichtung kann beispielsweise über den weiteren Verdichter, ergänzende Ventile oder dergleichen erfolgen. Die Speichereinrichtung kann ein Behälter zur Aufnahme des weiteren Kältemittels sein.

Es kann vorgesehen sein, dass zumindest bei einer Temperatur von < -50 °C innerhalb des Prüfraums der weitere Verdichter betrieben wird. Ein Betrieb der jeweiligen Verdichter kann durch die Steuervorrichtung gesteuert beziehungsweise geregelt werden. Bis zu der Temperatur von -50 °C kann der Kühlkreislauf betrieben werden, wobei aufgrund des Tripelpunkts des Kohlenstoffdioxids tiefere Temperaturen nur schwer erreicht werden können. Sollen tiefere Temperaturen in dem Prüfraum ausgebildet werden, kann dies über den weiteren Kühlkreislauf mit dem weiteren Verdichter erfolgen. Dabei kann vorgesehen sein, dass dann alle Verdichter gleichzeitig, das heißt der Kühlkreislauf und der weitere Kühlkreislauf, betrieben werden.

Der Kühlkreislauf kann einen internen Wärmeübertrager aufweisen, der an einer Hochdruckseite des Kühlkreislaufs in der Strömungsrichtung nachfolgenden Gaskühler und vor dem Expansionsventil angeschlossen sein kann, wobei der interne Wärmeübertrager mit einem Mitteldruckbypass des Kühlkreislaufs gekoppelt sein kann, wobei der Mitteldruckbypass in der Strömungsrichtung nachfolgend dem internen Wärmeübertrager vor dem Gaskühler und vor dem Expansionsventil an der Hochdruckseite sowie vor dem Hochdruckverdichter und nachfolgend dem Niederdruckverdichter an einer Mitteldruckseite des Kühlkreislaufs angeschlossen sein kann, wobei mittels eines weiteren Expansionsventils Kältemittel von der Hochdruckseite über den internen Wärmeübertrager in die Mitteldruckseite dosiert werden kann. Unmittelbar nachfolgend dem internen Wärmeübertrager und vor dem Expansionsventil kann folglich der Mitteldruckbypass mit dem weiteren Expansionsventil am Kreislauf angeschlossen sein. Über das weitere Expansionsventil kann dann auch Kältemittel, welches den internen Wärmeübertrager bereits passiert hat, geleitet und expandiert werden. In dem Mitteldruckbypass nachfolgend dem weiteren Expansionsventil kann ebenfalls der interne Wärmeübertrager angeschlossen sein. Das am weiteren Expansionsventil expandierte Kältemittel durchströmt den internen Wärmeübertrager, der dadurch gekühlt wird. Folglich erfolgt eine Kühlung des internen Wärmeübertragers in der Mitteldruckseite und damit eine Kühlung des Kältemittels in der Hochdruckseite des internen Wärmeübertragers. Prinzipiell kann jedoch auch der Mitteldruckbypass in Strömungsrichtung nachfolgend dem Gaskühler und vor dem internen Wärmeübertrager an den Kühlkreislauf angeschlossen sein, derart, dass das Kältemittel dann über das weitere Expansionsventil und den internen Wärmeübertrager fließt. Nachfolgend dem internen Wärmeübertrager kann der Mitteldruckbypass zwischen dem Niederdruckverdichter und dem Hochdruckverdichter angeschlossen sein, derart, dass das über den Mitteldruckbypass geleitete Kältemittel an dieser Stelle den in dem Kühlkreislauf zirkulierenden Kältemittel beigemischt werden kann. Durch die Verwendung des Mitteldruckbypasses mit dem internen Wärmeübertrager wird es möglich, je nach Kühllastanforderung der Steuervorrichtung, Kältemittel über den Mitteldruckbypass umzuleiten, sodass weniger Kältemittel über das Expansionsventil strömt. Gleichzeitig kann das über den Mitteldruckbypass fliesende Kältemittel mittels des internen Wärmeübertragers dazu genutzt werden das Kältemittel der Hochdruckseite zu temperieren. Die sehr hohe volumetrische Kälteleistung des Kohlenstoffdioxids wird so in Strömungsrichtung vor dem Wärmeübertrager abgezweigt und zur Kühlung des Kältemittels auf der Hochdruckseite genutzt, wenn weniger Kälteleistung im Prüfraum benötigt wird. Dadurch wird es dann auch möglich den Prüfraum kleiner auszubilden und den mit Kohlenstoffdioxid betriebenen Kühlkreislauf für kompaktere Prüfkammern nutzbar zu machen.

Über das zweite Expansionsventil kann Kältemittel von der Hochdruckseite in die Mitteldruckseite über den internen Wärmeübertrager dosiert werden, derart, dass das Kältemittel in dem internen Wärmeübertrager vollständig gasförmig bzw. entspannt wird und/oder das in der Mitteldruckseite befindliche Kältemittel gekühlt wird. So kann das verdichtete und stark überhitzte Kältemittel nach dem Niederdruckverdichter gekühlt werden. Auch kann das zweite Expansionsventil die Mitteldruckseite des internen Wärmeübertragers kühlen, um auf der Hochdruckseite des internen Wärmeübertragers befindliches transkritisches Kältemittel zusätzlich abzukühlen. Weiter kann das über den Mitteldruckbypass strömende, vergleichsweise kalte Kältemittel dann zwischen dem Niederdruckverdichter und dem Hochdruckverdichter eingeleitet werden. Wenn der Niederdruckverdichter in Betrieb ist, fördert dieser Kältemittel von einer Niederdruckseite des Kühlkreislaufs zu der Mitteldruckseite, wobei das Kältemittel dann hier bereits eine sehr hohe Temperatur aufweisen kann. Dies kann zu einer thermischen Überlastung am Hochdruckverdichter führen. Durch das Beimischen des vergleichsweise kälteren Kältemittels über den Mitteldruckbypass kann diese thermische Überlastung verhindert werden.

Mittels des internen Wärmeübertragers kann das Kältemittel der Hochdruckseite unterkühlt werden. Durch diese zusätzliche Unterkühlung kann eine Enthalpiedifferenz am Wärmeübertrager vergrößert werden, was wiederrum zu einer Erhöhung der Kälteleistung des Wärmeübertragers führt. Hierdurch wird es möglich besonders tiefe Temperaturen in dem Prüfraum effizient auszubilden.

Über das zweite Expansionsventil kann Kältemittel von der Hochdruckseite in die Mitteldruckseite dosiert werden, derart, dass ein Massenstrom von Kältemittel an dem Hochdruckverdichter stets größer ist als ein Massenstrom von Kältemittel an dem Niederdruckverdichter. Bei einer Unterkühlung des Kältemittels durch den internen Wärmeübertrager kommt es zu keiner Verlustleistung am Wärmeübertrager, da der geförderte Massenstrom über den Hochdruckverdichter deutlich größer sein kann als der geförderte Massenstrom über den Niederdruckverdichter. Ursache hierfür ist eine deutlich höhere Dichte des Kältemittels an einem Eintritt des Hochdruckverdichters im Gegensatz zu der Dichte des Kältemittels an einem Eintritt des Niederdruckverdichters. Die Massenströme in dem Kühlkreislauf können durch die Gleichung 0 = m_{Hochdruckverdichter} - (m_{Niederdruckverdichter} + m_{interner Wärmeübertrager}) beschrieben werden. Demnach ergibt sich der Massenstrom des internen Wärmeübertragers aus der Differenz aus den Massenströmen des Hochdruckverdichters und des Niederdruckverdichters. Die Steuervorrichtung kann so eingerichtet sein, dass dieses Verhältnis, durch eine Regelung des zweiten Expansionsventils, stets eingehalten wird. So kann ein Absinken eines Drucks der Mitteldruckseite verhindert werden. Dieses Absinken des Drucks der Mittelseite könnte zu einer Verschiebung eines Druckverhältnisses bei dem Hochdruckverdichter führen, so dass der Hochdruckverdichter und/oder der Niederdruckverdichter eine vorgesehene Einsatzgrenze überschreiten könnte, was es zu vermeiden gilt.

So kann eine Regelung des zweiten Expansionsventils in Abhängigkeit eines Drucks und/oder einer Temperatur des in der Mitteldruckseite befindlichen Kältemittels erfolgen. Die Messung des Drucks und/oder der Temperatur kann mittels entsprechender Sensoren erfolgen. Das zweite Expansionsventil kann dann mittels der Steuervorrichtung bzw. einer Regeleinrichtung der Steuervorrichtung so geregelt werden, dass eine Ansaugtemperatur des Hochdruckverdichters und/oder ein Druck an einer Eintrittsseite des Hochdruckverdichters in einem erforderlichen Bereich liegt. So kann eine mögliche Beschädigung des Hochdruckverdichters und/oder des Niederdruckverdichters infolge von unzuträglichen Temperaturen und Drücken mit einfachen Mitteln vermieden werden.

Ein Druck des Kältemittels auf der Hochdruckseite kann vermindert werden, wenn der Kühlkreislauf in einem Teillast-Betriebszustand betrieben werden kann. In einem Teillast-Betriebszustand wird der Kühlkreislauf nicht in Volllast betrieben. Vielmehr öffnet das Expansionsventil aufgrund einer abnehmenden Kühllastanforderung der Steuervorrichtung bzw. des Prüfraums mit Unterbrechungen, d. h. nicht dauerhaft oder vollständig. Dadurch, dass das Kältemittel auf der Hochdruckseite einen geringeren Druck aufweist, kann auch eine Verdichtungsendtemperatur des Hochdruckverdichters niedriger sein, wodurch eine abgegebene Wärmemenge über den Gaskühler über eine Umgebung, in welcher sich die Prüfkammer befindet, verringert werden kann. Eine thermische Belastung eines Aufstellungsraums der Prüfkammer, welcher möglicherweise klimatisiert ist, kann dann vermindert werden. Bei dem Teillast-Betriebszustand ist nur eine sehr geringe Kälteleistung erforderlich, beispielsweise weniger als 2% der Kälteleistung des Kühlkreislaufs, und/oder bei Temperaturen im Prüfraum von beispielsweise ≥ -10°C. Da eine Leistung der Verdichter, beispielsweise bei Kompressoren, kaum regelbar ist, wird bei einer geringen benötigten Kälteleistung und/oder bei einer geringen Temperaturdifferenz zwischen einer Soll-Temperatur und einer Ist-Temperatur im Prüfraum durch die Absenkung des Drucks des Kältemittels auf der Hochdruckseite die geringere Kälteleistung ausgebildet, ohne dass die Verdichter gleich abgeschaltet werden müssen. So können häufige Einschaltintervalle für den Niederdruckverdichter und den Hochdruckverdichter vermieden werden, weshalb die Verdichter mit langer Lebensdauer betrieben werden können.

Mittels eines in einer Strömungsrichtung nachfolgend dem Gaskühler angeordneten Hochdruckventils des Kühlkreislaufs kann gasförmiges und/oder flüssiges Kältemittel in einen Speicherbehälter für Kältemittel dosiert werden, wobei der Speicherbehälter über einen Mitteldruckbypass des Kühlkreislaufs an einer Mitteldruckseite des Kühlkreislaufs in der Strömungsrichtung vor dem Hochdruckverdichter und nachfolgendem Niederdruckverdichter angeschlossen sein kann, wobei mittels eines Mitteldruckventils gasförmiges Kältemittel aus dem Speicherbehälter in die Mitteldruckseite dosiert werden kann, wenn der Niederdruckverdichter abgeschaltet ist. Je nach Entnahmestelle an dem Speicherbehälter kann flüssiges oder gasförmiges Kältemittel aus dem Speicherbehälter entnommen werden. Das flüssige Kältemittel kann weiter über das Expansionsventil geleitet werden, wobei es durch Expansion infolge eines Druckabfalls wiederum gasförmig werden kann. Dabei durchströmt es den Wärmeübertrager, der dadurch gekühlt wird. Bei dieser Ausführungsform des Kühlkreislaufs kann vorgesehen sein, dass das Hochdruckventil in Strömungsrichtung nachfolgend dem Gaskühler in dem Kühlkreislauf angeordnet ist, um gasförmiges und/oder flüssiges Kältemittel über das Hochdruckventil in den Speicherbehälter zu dosieren. Der Speicherbehälter ist im Wesentlichen ein Druckbehälter, bei dem bei Ausbildung einer Phasengrenze das flüssige Kältemittel in einem unteren Bereich und das gasförmige Kältemittel in einem oberen Bereich des Druckbehälters gespeichert ist. Aus dem Speicherbehälter kann dann je nach Entnahmestelle einem Speicherbehälter flüssiges oder gasförmiges Kältemittel entnommen werden. So kann flüssiges Kältemittel dem Expansionsventil zugeführt und zur Kühlung des Wärmeübertrages in diesem entspannt werden.

Der Kühlkreislauf kann in einem thermodynamisch unterkritischen oder transkritischen Betriebszustand betrieben werden. Je nach Kühllastanforderung innerhalb des Prüfraums kann der Betriebszustand mittels der Steuervorrichtung entsprechend verändert werden. Bei dem unterkritischen Betrieb des Kühlkreislaufs erfolgt eine Verflüssigung des Kältemittels im Gaskühler unterhalb des kritischen Punktes des Kältemittels sowie eine Entspannung am Expansionsventil und eine Umwandlung in die gasförmige Phase oder Nassdampf. Zumindest im unterkritischen Betriebszustand oder auch bei niedrigen Umgebungstemperaturen kann der Hochdruckverdichter und der Niederdruckverdichter betrieben werden. Der unterkritische Betriebszustand des Kühlkreislaufs entspricht einem Teillastbetrieb. Beim transkritischen Betriebszustand zirkuliert das Kältemittel im Kühlkreislauf im Wesentlichen im gasförmigen Zustand. D.h. eine Temperaturdifferenz ist soweit vermindert, dass das Kältemittel nicht im Gaskühler verflüssigt wird. Auch wird im transkritischen Betriebszustand ein Druck oberhalb des kritischen Punktes des Kältemittels am Gaskühler erreicht. Wenn beispielsweise eine hohe Kühllastanforderung vorliegt, bzw. eine Abkühlung ausgehend von + 180°C auf - 20°C erforderlich ist, kann der Kühlkreislauf transkritisch betrieben werden. Für den Fall, dass eine geringe Kühllastanforderung innerhalb des Prüfraums vorliegt, beispielsweise wenn eine Temperatur konstant gehalten werden soll, oder niedrige Umgebungstemperaturen vorliegen, kann der Kühlkreislauf unterkritisch betrieben werden. Dadurch kann insbesondere bei geringen Kühllastanforderungen, wie beispielsweise auch bei niedrigen Umgebungstemperaturen, eine Effizienzsteigerung im Gegensatz zu ausschließlich transkritischen Betriebszuständen erzielt werden. Der Wechsel zwischen dem unterkritischen und dem transkritischen Betriebszustand wird insbesondere durch den Mitteldruckbypass und den internen Wärmeübertrager möglich.

In dem Kühlkreislauf kann ein zweiter Bypass mit zumindest einem dritten Expansionsventil ausgebildet sein, wobei der zweite Bypass in Strömungsrichtung nach einem internen Wärmeübertrager oder dem Gaskühler und vor dem Expansionsventil an eine Hochdruckseite sowie nach dem Wärmeübertrager und vor dem Niederdruckverdichter an eine Niederdruckseite angeschlossen sein kann, wobei eine Sauggastemperatur und/oder ein Sauggasdruck des Kältemittels auf der Niederdruckseite des Kühlkreislaufs vor dem Niederdruckverdichter derart geregelt werden kann, dass über das dritte Expansionsventil Kältemittel in die Niederdruckseite dosiert werden kann. Mittels des dritten Expansionsventils kann so die Sauggastemperatur und/oder der Sauggasdruck vor dem Niederdruckverdichter derart beeinflusst werden, dass sich eine Verdichtungsendtemperatur des Niederdruckverdichters innerhalb eines für den Niederdruckverdichter vorgesehenen Betriebsbereiches befindet. So kann eine Sauggastemperatur des Niederdruckverdichters besonders stark ansteigen, wenn eine Temperatur in dem Prüfraum von beispielsweise + 180°C auf eine niedrigere Temperatur abgesenkt werden soll. Da sich der Wärmeübertrager im Prüfraum befindet, kann bei besonders hohen Temperaturen im Prüfraum von beispielsweise +180°C das Kältemittel mit dieser Temperatur aus dem Wärmeübertrager zu dem Niederdruckverdichter strömen. Bevor das stark überhitzte Kältemittel dem Niederdruckverdichter zugeführt wird, kann es durch das über das dritte Expansionsventil dosierte Kältemittel abgekühlt werden.

In dem Kühlkreislauf kann ein Regelbypass mit zumindest einem Regelventil ausgebildet sein, wobei der Regelbypass in Strömungsrichtung nach dem Hochdruckverdichter und vor dem Gaskühler an eine Hochdruckseite sowie nach dem Wärmeübertrager und vor dem Niederdruckverdichter an eine Niederdruckseite angeschlossen sein kann, wobei eine Sauggastemperatur und/oder ein Sauggasdruck des Kältemittels auf der Niederdruckseite des Kühlkreislaufs vor dem Niederdruckverdichter derart geregelt werden kann, und/oder eine Druckdifferenz zwischen der Hochdruckseite und der Niederdruckseite des Kühlkreislaufs derart ausgeglichen werden kann, dass über das Regelventil Kältemittel in die Niederdruckseite dosiert werden kann. Demnach ist der Regelbypass so ausgebildet, dass über das Regelventil Kältemittel von der Hochdruckseite auf die Niederdruckseite geleitet werden kann. Das Kältemittel kann dabei überhitzt bzw. gasförmig sein. Ein Zurückleiten von überhitzten Kältemittel von der Hochdruckseite auf die Niederdruckseite mittels des Regelbypasses ist insbesondere dann vorteilhaft, wenn der Kühlkreislauf in einem Teillast-Betriebszustand betrieben wird. Da dann das Expansionsventil nur wenig oder selten geöffnet wird, besteht die Gefahr, dass ein Saugdruck vor dem Niederdruckverdichter zu weit absinkt. Bei der Verwendung von Kohlenstoffdioxid als Kältemittel kann bei einem Druck unterhalb von 5,16 bar absolut Trockeneis entstehen, welches einen sicheren Betrieb des Kühlkreislaufes stören und gegebenenfalls den Niederdruckverdichter beschädigen könnte. Da über den Regelbypass unmittelbar nachfolgend dem Hochdruckverdichter stark überhitztes Kältemittel vor den Niederdruckverdichter geleitet werden kann, kann wirkungsvoll eine Bildung von Trockeneis verhindert werden. Darüber hinaus ist es auch möglich, über den Regelbypass eine Druckdifferenz zwischen der Hochdruckseite und der Niederdruckseite des Kühlkreislaufs auszugleichen, beispielsweise wenn die Kühleinrichtung nicht in Betrieb ist und dann die Gefahr besteht, dass infolge eines Temperaturausgleichs mit einer Umgebung Kältemittel erwärmt wird und sich ein unerwünscht hoher Druck in dem Kühlkreislauf einstellt.

Mittels eines Entfeuchterbypasses des Kühlkreislaufs, mit einem Entfeuchterventil und mit einem zweiten Wärmeübertrager in dem Prüfraum, kann Luft in dem Prüfraum entfeuchtet werden. Diese Entfeuchtung kann zu einem bestimmten Zeitpunkt eines durchgeführten Prüfzyklus erfolgen, insbesondere immer dann, wenn eine Temperatur in dem Prüfraum in einem Bereich von > 0 bis < 100°C ausgebildet ist. Ist eine Temperatur unterhalb oder oberhalb dieses Bereichs innerhalb des Prüfraums ausgebildet, kann sich kein Wasser in der flüssigen Phase an dem zweiten Wärmeübertrager niederschlagen, sodass in diesen Bereichen eine Funktion des Entfeuchterbypasses nicht gegeben ist. Demnach kann der Kühlkreislauf der Kühleinrichtung so beschaffen sein, dass im Rahmen eines Prüfzyklus die Temperatur von -20°C bis +180°C innerhalb des Prüfraums ausgebildet werden kann, wobei die Entfeuchtung der Luft mittels des Entfeuchterbypasses nur in einem Teilbereich dieses Temperaturbereichs durchgeführt werden kann. Die Entfeuchtung verläuft derart, dass mit dem Entfeuchterventil das Kältemittel von einer Hochdruckseite des Kühlkreislaufs in eine Niederdruckseite des Kühlkreislaufs dosiert wird. Dabei kommt es zu einer Abkühlung des zweiten Wärmeübertragers, welcher in einer Strömungsrichtung des Kältemittels nachfolgend dem Entfeuchterventil in dem Entfeuchterbypass angeordnet ist. Die Steuervorrichtung kann nun das Kältemittel so über das Entfeuchterventil dosieren, dass eine gewünschte Temperaturdifferenz zwischen der Temperatur der Luft in dem Prüfraum und der Temperatur des zweiten Wärmeübertragers erzielt wird. Diese Temperaturdifferenz kann dabei so gewählt werden, dass es zu einer Kondensation von Wasser der Luft des Prüfraums an dem zweiten Wärmeübertrager kommt. Hierdurch ist es möglich eine gezielte Entfeuchtung der Luft des Prüfraums im Wesentlichen unabhängig von einer Ausbildung einer Temperatur in dem Prüfraum vorzunehmen. So kann das Expansionsventil und das Entfeuchterventil voneinander unabhängig mittels der Steuervorrichtung gesteuert werden. Eine Absenkung einer Temperatur in dem Prüfraum kann dann beispielsweise von einer mehr oder weniger starken Entfeuchtung begleitet sein, wodurch eine relative Luftfeuchtigkeit genauer einstellbar bzw. regelbar wird. Insgesamt kann so mit nur wenigen Bauteilen ein klimatischer Prüfzyklus wesentlich genauer mit einer kompakt aufgebauten Prüfkammer durchgeführt werden.

Der Entfeuchterbypass kann in Strömungsrichtung nach dem Gaskühler und vor dem Expansionsventil an einer Hochdruckseite des Kühlkreislaufs sowie nach dem Wärmeübertrager und vor dem Niederdruckverdichter an einer Niederdruckseite des Kühlkreislaufs angeschlossen sein, wobei über das Entfeuchterventil Kältemittel von der Hochdruckseite in die Niederdruckseite dosiert werden kann, derart, dass der zweite Wärmeübertrager gekühlt wird. Das Entfeuchterventil kann ein elektronisches Expansionsventil oder auch ein Magnetventil mit einer nachfolgenden Drosselung, beispielsweise durch ein Kapillarrohr, Düse oder dergleichen oder ein thermostatisches Expansionsventil sein. Optional kann auch vorgesehen sein, dass der Entfeuchterbypass in Strömungsrichtung nach einem eventuell vorhandenen internen Wärmeübertrager, der dem Gaskühler nachfolgt, angeschlossen sein kann. Der Entfeuchterbypass kann daher mit dem Kühlkreislauf parallel zu dem Expansionsventil und dem Wärmeübertrager angeschlossen sein. Der Entfeuchterbypass ist so besonders einfach ausbildbar.

Als Kältemittel kann ein unflouriertes Kältemittel, bevorzugt reines Kohlenstoffdioxid, in dem Kühlkreislauf und/oder R469A als das weitere Kältemittel in dem weiteren Kühlkreislauf verwendet werden. Reines Kohlenstoffdioxid weist ein GWP von 1 auf, ist nicht brennbar, ungefährlich und kostengünstig erhältlich. Darüber hinaus ist Kohlenstoffdioxid ein Reinstoff bzw. azeotrop, was die vorteilhafte Durchführung des Verfahrens und dessen Varianten überhaupt erst ermöglicht. Ein Kältemittel mit zeotropen Verhalten würde hingegen eine Bereitstellung einer ausreichenden Menge von gasförmigem Kältemittel bei einer sehr geringen Temperaturdifferenz kaum ermöglichen und somit eine Leistungsregelung des Hochdruckverdichters kaum zulassen. R469A ist ein vergleichsweise umweltfreundliches Kältemittel, welches ein vergleichsweise niedriges GWP aufweist, und aufgrund des hohen Anteils an Kohlenstoffdioxid nicht brennbar ist. Insbesondere können mit dem weiteren Kältemittel auch Temperaturen von bis zu -80 °C in dem Prüfraum beziehungsweise an dem Wärmeübertrager ausgebildet werden.

Mittels der Temperiervorrichtung kann eine Temperatur in einem Temperaturbereich von - 50°C bis + 180°C, bevorzugt von - 80°C bis + 180°C, besonders bevorzugt von - 90°C bis + 180°C, innerhalb des Prüfraums ausgebildet werden.

Die erfindungsgemäße Prüfkammer, insbesondere Klimakammer zur Konditionierung von Luft, umfasst einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von - 20°C bis + 180°C innerhalb des Prüfraums ausbildbar ist, wobei die Temperiervorrichtung eine Kühleinrichtung mit einem Kühlkreislauf mit Kohlenstoffdioxid als einem Kältemittel, einem Wärmeübertrager im Prüfraum, einem Niederdruckverdichter und einem in einer Strömungsrichtung des Kältemittels den Niederdruckverdichter nachfolgenden Hochdruckverdichter, einem Gaskühler und einem Expansionsventil aufweist, wobei die Prüfkammer eine Steuervorrichtung zur Steuerung und/oder Regelung der Temperatur in dem Prüfraum aufweist, wobei die Kühleinrichtung einen weiteren Kühlkreislauf mit einem weiteren Kältemittel, dem Wärmeübertrager im Prüfraum, einem weiteren Verdichter, einem weiteren Wärmeübertrager und einem weiteren Expansionsventil aufweist. Zu den Vorteilen der erfindungsgemäßen Prüfkammer wird auf die Vorteilsbeschreibung des erfindungsgemäßen Verfahrens verwiesen.

Die Temperiervorrichtung kann eine Heizeinrichtung mit einer Heizung und einem Heiz-Wärmeübertrager in dem Prüfraum aufweisen. Die Heizeinrichtung kann beispielsweise eine elektrische Widerstandsheizung sein, die den Heiz-Wärmeübertrager beheizt, derart, dass über den Heiz-Wärmeübertrager eine Temperaturerhöhung im Prüfraum ermöglicht wird. Wenn der Wärmeübertrager und der Heiz-Wärmeübertrager mittels der Steuervorrichtung zur Kühlung oder Erwärmung der im Prüfraum umgewälzten Luft gezielt gesteuert bzw. geregelt werden können, kann mittels der Temperiervorrichtung dann innerhalb des Prüfraums eine Temperatur in den vorstehend angegebenen Temperaturbereichen ausgebildet werden.

Der Niederdruckverdichter und der Hochdruckverdichter können in einem gemeinsamen Gehäuse angeordnet sein. Weiter können der Niederdruckverdichter und der Hochdruckverdichter über einen gemeinsamen bzw. den gleichen Motor angetrieben werden. So ist die Kühleinrichtung besonders kompakt ausbildbar.

Weitere Ausführungsformen einer Prüfkammer ergeben sich aus den Merkmalsbeschreibungen der auf den Verfahrensanspruch 1 rückbezogenen Unteransprüche.

Nachfolgend wird eine bevorzugte Ausführungsform der Erfindung unter Bezugnahme auf die beigefügten Zeichnungen näher erläutert.

Es zeigen:
- **Fig. 1**: eine schematische Darstellung einer Kühlreinrichtung;
- **Fig. 2**: ein Druck-Enthalpie-Diagramm mit einem Betriebszustand eines Kühlkreislaufs.

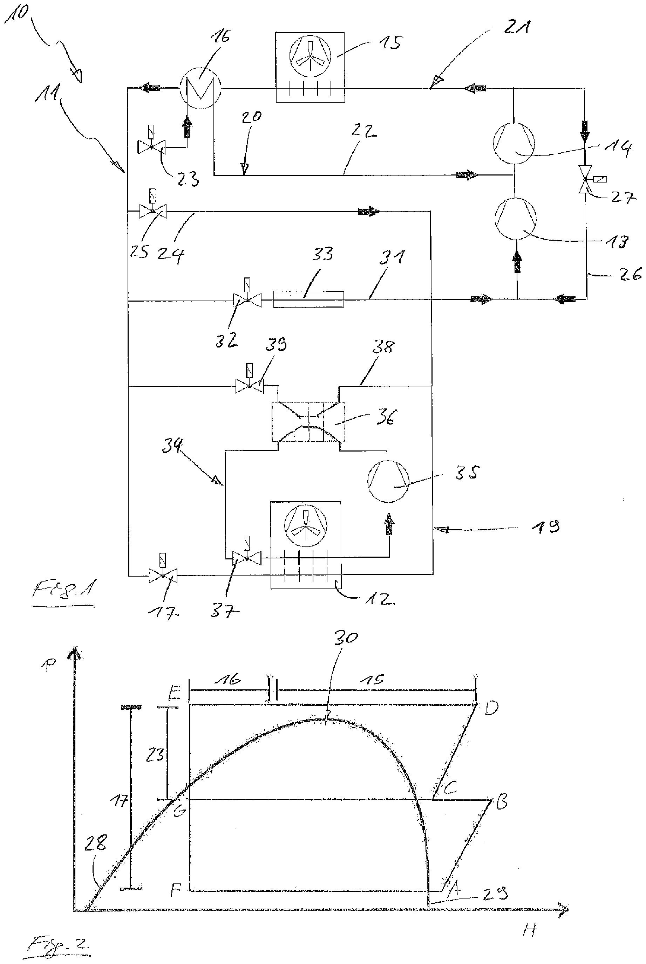

Die **Fig. 1** zeigt eine mögliche Ausführungsform einer Kühleinrichtung 10 einer hier nicht dargestellten Prüfkammer. Die Kühleinrichtung 10 umfasst einen Kühlkreislauf 11 mit Kohlenstoffdioxid (CO₂) als einem Kältemittel, einem Wärmeübertrager 12, einem Niederdruckverdichter 13, einem Hochdruckverdichter 14, einem Gaskühler 15, einem internen Wärmeübertrager 16 und einem Expansionsventil 17. Der Gaskühler 15 ist hier in Art eines Wärmeübertragers bzw. Kondensators ausgebildet und über ein Wärmeträgermedium, wie beispielsweise Luft oder Wasser, gekühlt. Der Wärmeübertrager 12 ist in einem hier nicht dargestellten Luftbehandlungskanal des Prüfraumes der Prüfkammer angeordnet, derart, dass Luft im Prüfraum, die über den Luftbehandlungskanal umgewälzt wird, mittels des Wärmeübertragers 12 gekühlt werden kann. Weiter weist der Kühlkreislauf 11 eine Niederdruckseite 19, eine Mitteldruckseite 20 und eine Hochdruckseite 21 auf. In der Niederdruckseite 19 ist ein Druck des Kältemittels vergleichsweise niedriger als in der Mitteldruckseite 20. In der Mitteldruckseite 20 ist ein Druck des Kältemittels vergleichsweise niedriger als in der Hochdruckseite 21.

Der Kühlkreislauf 11 weist weiter in einer Strömungsrichtung des Kältemittels nachfolgend den internen Wärmeübertrager 16 und vor dem Expansionsventil 17 einen Mitteldruckbypass 22 auf, der in der Strömungsrichtung nachfolgend dem Niederdruckverdichter 13 und vor dem Hochdruckverdichter 14 mündet. In dem Mitteldruckbypass 22 ist ein zweites Expansionsventil 23 angeordnet. Das zweite Expansionsventil 23 ist dabei in der Strömungsrichtung vor dem internen Wärmeübertrager 16 angeschlossen. Von dem Gaskühler 15 kann nun im Wesentlichen flüssiges Kältemittel durch die Hochdruckseite 21 des internen Wärmeübertragers 16 geleitet und bei Bedarf über das zweite Expansionsventil 23 in die Mitteldruckseite des internen Wärmeübertragers 16 dosiert werden. Dabei wird das Kältemittel der Hochdruckseite 21 so weit unterkühlt, dass am Expansionsventil 17 bzw. dem Wärmeübertrager 12 eine noch niedrigere Temperatur ausgebildet werden kann. Gleichzeitig kann das über den Mitteldruckbypass 22 strömende Kältemittel dazu benutzt werden, eine Sauggastemperatur des Hochdruckverdichters 14 vergleichsweise niedrig zu halten.

Darüber hinaus umfasst der Kühlkreislauf 11 einen zweiten Bypass 24 mit einem dritten Expansionsventil 25. Der zweite Bypass 24 ist in der Strömungsrichtung des Kältemittels nachfolgend dem internen Wärmeübertrager 16 und vor dem Expansionsventil 17 sowie in der Strömungsrichtung nachfolgend dem Wärmeübertrager 14 und vor dem Niederdruckverdichter 13 an den Kühlkreislauf 11 angeschlossen. Mittels des dritten Expansionsventils 25 kann flüssiges Kältemittel auf die Niederdruckseite 19, vorbei an dem Expansionsventil 17 und dem Wärmeüberlager 12, geleitet werden. Dadurch wird es möglich, eine Sauggastemperatur und/oder einen Sauggasdruck in der Niederdruckseite 19 vor dem Niederdruckverdichter 13 zu regeln.

Weiter umfasst der Kühlkreislauf 11 einen Regelbypass 26 mit einem Regelventil 27, wobei der Regelbypass 26 in der Strömungsrichtung des Kältemittels nachfolgend dem Hochdruckverdichter 14 und vor dem Gaskühler 15 sowie in der Strömungsrichtung nachfolgend dem Wärmeübertrager 12 und vor dem Niederdruckverdichter 13 an dem Kühlkreislauf 11 angeschlossen ist. Mittels des Regelbypass 26 bzw. des Regelventils 27 kann in Abhängigkeit eines Betriebszustandes des Kühlkreislaufes 11 Kältemittel, insbesondere überhitztes Kältemittel bzw. gasförmiges Kältemittel, von der Hochdruckseite 21 auf die Niederdruckseite 19 vor den Niederdruckverdichter 13 geleitet werden. Hierdurch wird es ebenfalls möglich, eine Sauggastemperatur und/oder einen Sauggasdruck der Niederdruckseite 19 vor dem Niederdruckverdichter 13 zu regeln. Eine Regelung kann mittels einer nicht dargestellten Steuervorrichtung der Prüfkammer und im Kühlkreislauf 11 befindliche Sensoren, insbesondere Druck- und Temperatursensoren, erfolgen.

Die **Fig. 2** zeigt ein Druck-Enthalpie-Diagramm (Log-p-h-Diagramm) für das im Kühlkreislauf 11 zirkulierende Kältemittel für einen Betriebszustand des Kühlkreislaufs 11 bei einem Betrieb des Niederdruckverdichters 13 und des Hochdruckverdichters 14. In dem Diagramm ist die spezifische Enthalpie auf der Abszissenachse und der logarithmisch skalierte Druck auf der Ordinatenachse dargestellt. Eine Siedelinie 28 markiert einen Übergang von gesättigter Flüssigkeit im Nassdampf, wobei eine Taulinie 29 einen Übergang von Nassdampf zu gesättigtem Dampf markiert. Siedelinie 28 und Taulinie 29 treffen sich im kritischen Punkt 30.

Die **Fig. 2** zeigt einen überkritischen Betriebszustand des Kühlkreislaufs 11, bei dem ausgehend von der Position A das Kältemittel von der Niederdruckseite 19 mit dem Niederdruckverdichter 13 angesaugt und komprimiert wird, so dass ein Druck entsprechend der Position B in Strömungsrichtung nach dem Niederdruckverdichter 13 erreicht wird. Das Kältemittel wird nachfolgend der Position C von dem Hochdruckverdichter 14 angesaugt und bis zu der Position D hin verdichtet. Hierdurch strömt das Kältemittel den Gaskühler 15 im transkritischen Zustand und wird verflüssigt bzw. enthitzt. Danach passiert das Kältemittel den internen Wärmeübertrager 16 bis zur Position E. Ein Teil des flüssigen Kältemittels strömt über das Expansionsventil 17, wobei hier eine Entspannung des Kältemittels (Positionen E bis F) erfolgt, wobei das Kältemittel in dem Wärmeübertrager 12 verdampft (Positionen F bis A). Ein anderer Teil des Kältemittels strömt über den Mitteldruckbypass 22, wobei hier im zweiten Expansionsventil 23 ebenfalls eine Entspannung des Kältemittels (Positionen E bis G) erfolgt, wobei das Kältemittel in dem internen Wärmeübertrager 16 verdampft (Positionen G bis C). In der Position C vermischt sich das Kältemittel aus dem Mitteldruckbypass 22 mit dem Kältemittel aus dem Niederdruckverdichter 13.

Weiter ist in dem Kühlkreislauf 11 ein Entfeuchterbypass 31, mit einem Entfeuchterventil 32 und mit einem zweiten Wärmeübertrager 33, welcher sich ebenfalls in dem Prüfraum befindet, angeordnet. Mittels des zweiten Wärmeübertragers 33 bzw. dem Entfeuchterbypass 31 kann Luft in dem Prüfraum entfeuchtet werden. Die Prüfkammer verfügt hierzu über die nicht näher dargestellte Steuervorrichtung, mit der eine Temperatur und/oder eine relative Luftfeuchtigkeit in dem Prüfraum gesteuert bzw. geregelt werden kann. Die Steuervorrichtung kann dazu insbesondere das Expansionsventil 17 und das zweite Expansionsventil 23 betätigen. Dadurch wird es möglich mit der Kühleinrichtung 10 klimatische Prüfungen durchführen, bei denen eine Entfeuchtung bzw. relative Luftfeuchtigkeit in dem Prüfraum auch bei konstanter oder fallender Temperatur in dem Prüfraum sehr genau ausgebildet werden kann.

Darüber hinaus umfasst die Kühleinrichtung 10 einen weiteren Kühlkreislauf 34 mit einem weiteren Kältemittel, dem Wärmeübertrager 12, einem weiteren Verdichter 35, einem weiteren Wärmeübertrager 36 und einem weiteren Expansionsventil 37. Als weiteres Kältemittel wird hier R469A verwendet. Als weiteres Kältemittel kann alternativ auch Kältemittel auf Basis von Kohlenstoffdioxid, oder auch ein brennbares Kältemittel verwendet werden. Der weitere Kühlkreislauf 34 dient zur ergänzenden Kühlung des Prüfraums über den Wärmeübertrager 12.

In dem Kühlkreislauf 11 ist ein weiterer Bypass 38 mit einem weiteren Ventil 39 ausgebildet. Der weitere Bypass 38 verläuft über den weiteren Wärmeübertrager 36 und ist in Strömungsrichtung nach dem Gaskühler 15 und vor dem Expansionsventil 17 an die Hochdruckseite 21 sowie nach dem Wärmeübertrager 12 und vor dem Niederdruckverdichter 13 an die Niederdruckseite 19 angeschlossen. Über das weitere Ventil 39 kann nun Kältemittel in die Niederdruckseite 19 beziehungsweise in den weiteren Wärmeübertrager 36 dosiert werden. Hierdurch wird das weitere Kältemittel des weiteren Kühlkreislaufs 34 in dem weiteren Wärmeübertrager 36 gekühlt beziehungsweise durch Kondensation verflüssigt. Der weitere Kühlkreislauf 34 kann dann in Betrieb genommen werden, wenn eine Temperatur in dem Prüfraum von unterhalb -50 °C ausgebildet werden soll. So wird es möglich, eine Temperatur in dem Prüfraum von bis zu -80 °C auszubilden.

## Patentansprüche

1. Verfahren zur Konditionierung von Luft in einem gegenüber einer Umgebung verschließbaren und temperaturisolierten Prüfraum einer Prüfkammer, insbesondere Klimakammer, zur Aufnahme von Prüfgut, wobei mittels einer Kühleinrichtung (10) einer Temperiervorrichtung der Prüfkammer, mit einem Kühlkreislauf (11) mit Kohlenstoffdioxid (CO₂) als einem Kältemittel, einem Wärmeübertrager (12) im Prüfraum, einem Niederdruckverdichter (13) und einem in einer Strömungsrichtung des Kältemittels dem Niederdruckverdichter nachfolgenden Hochdruckverdichter (14), einem Gaskühler (15) und einem Expansionsventil (17) eine Temperatur in einem Temperaturbereich von -20 °C bis +180 °C innerhalb des Prüfraums ausgebildet wird, wobei die Temperatur in dem Prüfraum mittels einer Steuervorrichtung der Prüfkammer gesteuert und/oder geregelt wird,
**dadurch gekennzeichnet,**
**dass** mittels eines weiteren Kühlkreislaufs (34) der Kühleinrichtung mit einem weiteren Kältemittel, dem Wärmeübertrager im Prüfraum, einem weiteren Verdichter (35), einem weiteren Wärmeübertrager (36) und einem weiteren Expansionsventil (37) die Temperatur innerhalb des Prüfraums ausgebildet wird.

2. Verfahren nach Anspruch 1,
**dadurch gekennzeichnet,**
**dass** in dem Kühlkreislauf (11) ein weiterer Bypass (38) mit zumindest einem weiteren Ventil (39) und dem weiteren Wärmeübertrager (36) ausgebildet ist, wobei der weitere Bypass in Strömungsrichtung nach dem Gaskühler (15) und vor dem Expansionsventil (17) an eine Hochdruckseite (21) sowie nach dem Wärmeübertrager (12) und vor dem Niederdruckverdichter (13) an eine Niederdruckseite (19) angeschlossen ist, wobei über das weitere Ventil Kältemittel in die Niederdruckseite dosiert, und wobei das weitere Kältemittel des weiteren Kühlkreislaufs (34) in dem weiteren Wärmeübertrager gekühlt wird.

3. Verfahren nach Anspruch 1 oder 2,
**dadurch gekennzeichnet,**
**dass** an den weiteren Kühlkreislauf (34) eine Speichereinrichtung für das weitere Kältemittel angeschlossen ist, wobei bei einer Temperatur in einem Temperaturbereich von +50 °C bis +180 °C innerhalb des Prüfraums das weitere Kältemittel in die Speichereinrichtung verlagert wird.

4. Verfahren nach einem der vorangehenden Ansprüche,
**dadurch gekennzeichnet,**
**dass** zumindest bei einer Temperatur von < -50 °C innerhalb des Prüfraums der weitere Verdichter (35) betrieben wird.

5. Verfahren nach einem der vorangehenden Ansprüche,
**dadurch gekennzeichnet,**
**dass** der Kühlkreislauf (11) einen internen Wärmeübertrager (16) aufweist, der an einer Hochdruckseite (21) des Kühlkreislaufs in der Strömungsrichtung nachfolgend dem Gaskühler (15) und vor dem Expansionsventil (17) angeschlossen ist, wobei der interne Wärmeübertrager mit einem Mitteldruckbypass (22) des Kühlkreislaufs gekoppelt ist, wobei der Mitteldruckbypass in der Strömungsrichtung nachfolgend dem internen Wärmeübertrager oder dem Gaskühler und vor dem Expansionsventil an der Hochdruckseite sowie vor dem Hochdruckverdichter (14) und nachfolgend dem Niederdruckverdichter (13) an eine Mitteldruckseite (20) des Kühlkreislaufs angeschlossen ist, wobei mittels eines zweiten Expansionsventils (23) Kältemittel von der Hochdruckseite über den internen Wärmeübertrager in die Mitteldruckseite dosiert wird.

6. Verfahren nach Anspruch 5,
**dadurch gekennzeichnet,**
**dass** über das zweite Expansionsventil (23) Kältemittel von der Hochdruckseite (21) in die Mitteldruckseite (20) über den internen Wärmeübertrager (16) dosiert wird, derart, dass das Kältemittel in dem internen Wärmeübertrager vollständig gasförmig wird und/oder das in der Mitteldruckseite befindliche Kältemittel gekühlt wird.

7. Verfahren nach Anspruch 5 oder 6,
**dadurch gekennzeichnet,**
**dass** mittels des internen Wärmeübertragers (16) das Kältemittel der Hochdruckseite (21) unterkühlt wird.

8. Verfahren nach einem der Ansprüche 5 bis 7,
**dadurch gekennzeichnet,**
**dass** über das zweite Expansionsventil (23) Kältemittel von der Hochdruckseite (21) in die Mitteldruckseite (20) dosiert wird, derart, dass ein Massenstrom von Kältemittel an dem Hochdruckverdichter (14) stets größer ist als ein Massenstrom von Kältemittel an dem Niederdruckverdichter (13).

9. Verfahren nach einem der Ansprüche 5 bis 8,
**dadurch gekennzeichnet,**
**dass** eine Regelung des zweiten Expansionsventils (23) in Abhängigkeit eines Drucks und/oder einer Temperatur des in der Mitteldruckseite (20) befindlichen Kältemittels erfolgt.

10. Verfahren nach einem der Ansprüche 1 bis 4,
**dadurch gekennzeichnet,**
**dass** mittels eines in einer Strömungsrichtung nachfolgend dem Gaskühler angeordneten Hochdruckventils des Kühlkreislaufs gasförmiges und/oder flüssiges Kältemittel in einen Speicherbehälter für Kältemittel dosiert wird, wobei der Speicherbehälter über einen Mitteldruckbypass des Kühlkreislaufs an einer Mitteldruckseite des Kühlkreislaufs in der Strömungsrichtung vor dem Hochdruckverdichter und nachfolgend dem Niederdruckverdichter angeschlossen ist, wobei mittels eines Mitteldruckventils gasförmiges Kältemittel aus dem Speicherbehälter in die Mitteldruckseite dosiert wird, wenn der Niederdruckverdichter abgeschaltet ist.

11. Verfahren nach einem der vorangehenden Ansprüche,
**dadurch gekennzeichnet,**
**dass** der Kühlkreislauf (11) in einem thermodynamisch unterkritischen oder transkritischen Betriebszustand betrieben wird.

12. Verfahren nach einem der vorangehenden Ansprüche,
**dadurch gekennzeichnet,**
**dass** in dem Kühlkreislauf (11) ein zweiter Bypass (24) mit zumindest einem dritten Expansionsventil (25) ausgebildet ist, wobei der zweite Bypass in Strömungsrichtung nach einem internen Wärmeübertrager (16) oder dem Gaskühler (15) und vor dem Expansionsventil (17) an eine Hochdruckseite (21) sowie nach dem Wärmeübertrager (12) und vor dem Niederdruckverdichter (13) an eine Niederdruckseite (19) angeschlossen ist, wobei eine Sauggastemperatur und/oder ein Sauggasdruck des Kältemittels auf der Niederdruckseite des Kühlkreislaufs vor dem Niederdruckverdichter derart geregelt wird, dass über das dritte Expansionsventil Kältemittel in die Niederdruckseite dosiert wird.

13. Verfahren nach einem der vorangehenden Ansprüche,
**dadurch gekennzeichnet,**
**dass** in dem Kühlkreislauf (11) ein Regelbypass (26) mit zumindest einem Regelventil (27) ausgebildet ist, wobei der Regelbypass in Strömungsrichtung nach dem Hochdruckverdichter (14) und vor dem Gaskühler (15) an eine Hochdruckseite (21) sowie nach dem Wärmeübertrager (12) und vor dem Niederdruckverdichter (13) an eine Niederdruckseite (19) angeschlossen ist, wobei eine Sauggastemperatur und/oder ein Sauggasdruck des Kältemittels auf der Niederdruckseite des Kühlkreislaufs vor dem Niederdruckverdichter derart geregelt wird, und/oder eine Druckdifferenz zwischen der Hochdruckseite und der Niederdruckseite des Kühlkreislaufs derart ausgeglichen wird, dass über das Regelventil Kältemittel in die Niederdruckseite dosiert wird.

14. Verfahren nach einem der vorangehenden Ansprüche,
**dadurch gekennzeichnet,**
**dass** mittels eines Entfeuchterbypasses (31) des Kühlkreislaufs (11), mit einem Entfeuchterventil (32) und mit einem zweiten Wärmeübertrager (33) in dem Prüfraum, Luft in dem Prüfraum entfeuchtet wird.

15. Verfahren nach Anspruch 14,
**dadurch gekennzeichnet,**
**dass** der Entfeuchterbypass (31) in Strömungsrichtung nach dem Gaskühler (15) und vor dem Expansionsventil (17) an eine Hochdruckseite (21) des Kühlkreislaufs (11) sowie nach dem Wärmeübertrager (12) und vor dem Niederdruckverdichter (13) an eine Niederdruckseite (17) des Kühlkreislaufs angeschlossen ist, wobei über das Entfeuchterventil (32) Kältemittel von der Hochdruckseite in die Niederdruckseite dosiert wird, derart, dass der zweite Wärmeübertrager (33) gekühlt wird.

16. Verfahren nach einem der vorangehenden Ansprüche,
**dadurch gekennzeichnet,**
**dass** ein unfluoriertes Kältemittel, bevorzugt reines Kohlenstoffdioxid (CO₂), als das Kältemittel in dem Kühlkreislauf (11) und/oder R469A als das weitere Kältemittel in dem weiteren Kühlkreislauf (34) verwendet wird.

17. Verfahren nach einem der vorangehenden Ansprüche,
**dadurch gekennzeichnet,**
**dass** mittels der Temperiervorrichtung eine Temperatur in einem Temperaturbereich von -50 °C bis +180 °C, bevorzugt von -80 °C bis + 180 °C, innerhalb des Prüfraums ausgebildet wird.

18. Prüfkammer, insbesondere Klimakammer zur Konditionierung von Luft, umfassend einen gegenüber einer Umgebung verschließbaren und temperaturisolierten Prüfraum zur Aufnahme von Prüfgut, und eine Temperiervorrichtung zur Temperierung des Prüfraums, wobei mittels der Temperiervorrichtung eine Temperatur in einem Temperaturbereich von -20 °C bis +180 °C innerhalb des Prüfraums ausbildbar ist, wobei die Temperiervorrichtung eine Kühleinrichtung (10) mit einem Kühlkreislauf (11) mit Kohlenstoffdioxid als einem Kältemittel, einem Wärmeübertrager (12) im Prüfraum, einem Niederdruckverdichter (13) und einem in einer Strömungsrichtung des Kältemittels dem Niederdruckverdichter nachfolgenden Hochdruckverdichter (14), einem Gaskühler (15) und einem Expansionsventil (17) aufweist, wobei die Prüfkammer eine Steuervorrichtung zur Steuerung und/oder Regelung der Temperatur in dem Prüfraum aufweist,
**dadurch gekennzeichnet,**
**dass** die Kühleinrichtung einen weiteren Kühlkreislauf (34) mit einem weiteren Kältemittel, dem Wärmeübertrager im Prüfraum, einem weiteren Verdichter (35), einem weiteren Wärmeübertrager (36) und einem weiteren Expansionsventil (37) umfasst.

19. Prüfkammer nach Anspruch 18,
**dadurch gekennzeichnet,**
**dass** die Temperiervorrichtung eine Heizeinrichtung mit einer Heizung und einen Heiz-Wärmeübertrager in dem Prüfraum aufweist.
